# EUROPEAN PATENT APPLICATION

(11) **EP 4 149 125 A1**
(43) Date of publication of application: **15.03.2023**
(21) Application number: 22187135.3
(22) Date of filing: 03.11.2017
(51) Int. Cl.: H04W 4/00, H04W 88/04, H04L 67/14, H04L 67/563, H04L 69/24, H04W 76/14, H04W 48/02, H04W 84/18

(54) **MESSAGE EXCHANGE FOR WEARABLE DEVICES**

(30) Priority: 03.11.2016 EP 16197097
(62) Divisional of application: 17797300.5
(71) Applicant: IPCom GmbH & Co. KG, 82049 Pullach (DE)
(72) Inventor: SCHMIDT, Andreas, 38124 Braunschweig (DE); LUFT, Achim, 38118 Braunschweig (DE); HANS, Martin, 31162 Bad Salzdetfurth (DE)
(74) Representative: Tomlinson, Edward James

(57) **Abstract**

The present invention provides a method for a mobile communication device to communicate with a user device over a short range radio interface connection, the mobile communication device acting as a relaying node for enabling a connection of the user device to a core network, the method comprising negotiating capabilities for connecting the user device to the mobile communication device and for operating the user device using the mobile communication device as the relaying node.

## Description

The present invention relates to messaging performed between a wearable device and a mobile communication device, commonly referred to as a user equipment, UE.

Mobile communication terminals can select, reselect, and connect to a mobile relaying node offering connectivity into a Mobile Network Operator's (MNO's) core network. An air interface between the mobile communication terminal and the mobile relaying node may be based on LTE or some short range technology, such as Bluetooth^{®}, BT, or WiFi.

It is known for a relaying node to be controlled to form and administer device-to-device, D2D, clusters in an opportunistic fashion, for example in scope of 3GPP's ProSe (Proximity Services) feature. Many of these principles could be re-used for connecting wearables to a cell phone acting as a mobile relaying node.

For example, US 9,380,625 B2 describes a communication device having D2D capability, with this capability being signalled to a base station. US 2016/0150373 A1 describes forming a relay using a proximity service when a user equipment, UE, is not in range of a group communication service. A second UE acts as a relay UE for the group communication. US 2012/0238208 A1 describes a UE having a short range wireless transceiver which may be used to form an opportunistic network. US 2012/0250601 A1 describes the establishment of a non-access stratum, NAS, bearer between a UE and a core network and the use of the NAS bearer for exchanging data between a remote device and the core network using a short range radio connection. US 8,682,243 B2 describes using a network selection device for deciding whether a connection should be established using an opportunistic network or a direct connection. US 2013/0137469 A1 describes a method for transmitting an opportunistic network message.

US 2016/0295622 A1 describes a technique for connecting a first wireless device such as a laptop computer to a network via a second wireless device such as a mobile phone. Local connection information such as a data rate, RSSI or bit error rate may be braodcast such that other proximal devices may compare a connection quality with their own connection quality.

US 2015/0245186 A1 describes a wireless pairing between a first and a second electronic device. Once a connection has been established, information such as a capability exchange may be performed.

A widely implemented short range wireless connection is one according to the BT standard. Many products such as telephones, tablets, media players, laptops, console gaming equipment, health devices, and watches incorporate such a BT functionality. The technology is useful when information is to be transferred between two or more devices that are near each other in low-bandwidth situations. The protocols defined for BT simplify the discovery and setup of services between two devices. BT devices can advertise the services they provide. This makes using services easier, because more of the security, network address and permission configuration can be automated than with many other network types.

The BT protocol stack is split in two parts: a "controller stack" containing a timing critical radio interface, and a "host stack" dealing with high level data. In between these two parts of the protocol stack a host controller interface (HCI) may be deployed. The controller stack is generally implemented in a low cost silicon device containing the BT radio and a microprocessor. The host stack is generally implemented as part of an operating system, or as an installable package on top of an operating system. For integrated devices such as BT headsets, the host stack and controller stack can be executed on the same microprocessor (i.e. no HCI is required) to reduce mass production costs; this is known as a "host less" system.

An important protocol is the service discovery protocol (SDP). It allows a device to discover services offered by other devices, and their associated parameters. For example, a mobile phone is used with a BT headset, the phone uses SDP to determine which BT profiles the headset supports (for example, headset profile, hands free profile, advanced audio distribution profile (A2DP), etc.) and the protocol multiplexer settings needed for the phone to connect to the headset using each of them. Each service is identified by a universally unique identifier (UUID), with official services (i.e. BT profiles) assigned a short form UUID (16 bits rather than the full 128 bits). In the protocol stack, the SDP is often bound to (or integrated in) the L2CAP.

Data is exchanged between two (or more) BT devices via so-called BT profiles that were defined (in terms of parameters and behaviour) to support certain services. These BT profiles reside in higher layers of the protocol stack (e.g., the application layer) and must be implemented on both peer devices in order to support a certain service. Generally, adherence to profiles saves some time for transmitting parameters anew before a bi-directional link becomes effective. There is a wide range of BT profiles that describe many different types of applications or use cases for BT devices. For instance, one of the most commonly used BT profiles, namely the headset profile, to be used with a cellular phone can request establishment of an audio channel (relying on a synchronous connection-oriented (SCO) link for audio encoded in 64 kbit/s CVSD or PCM) plus some control channels for the exchange of minimal control commands (supporting a subset of AT commands from GSM 07.07) including the ability to ring, answer a call, hang up and adjust the volume. A very important and mandatory BT profile is the generic access profile (GAP). It provides the basis for all other profiles. GAP defines how two BT units discover and establish a connection with each other.

Another BT profile relevant for the present invention is the BT network encapsulation protocol (BNEP). It is used for transferring another protocol stack's data via an L2CAP channel. Its main purpose is the transmission of IP packets in the personal area networking profile. BNEP performs a function similar to the subnetwork access protocol (SNAP) in Wireless LAN. In Wireless LAN, SNAP fields may be added to packets at the transmitting node in order to allow the receiving node to pass each received frame to an appropriate device driver which understands the given protocol.

Of further relevance to the present invention is the 3GPP LTE mobile communication standard. The LTE air interface (also referred to as Uu interface) is logically divided into three protocol layers. The entities ensuring and providing the functionality of the respective protocol layers are implemented both in the mobile terminal and the base station. The bottommost layer is the physical layer (PHY), which represents the protocol layer 1 (L1) according to the OSI (Open System Interconnection) reference model. The protocol layer arranged above PHY is the data link layer, which represents the protocol layer 2 (L2) according to the OSI reference model. In an LTE communication system, L2 consists of a plurality of sublayers, namely the Medium Access Control (MAC) sublayer, the Radio Link Control (RLC) sublayer and the Packet Data Convergence Protocol (PDCP) sublayer. The topmost layer of the Uu air interface is the network layer, which is the protocol layer 3 (L3) according to the OSI reference model and consists of the Radio Resource Control (RRC) layer on the C-Plane. On the C-Plane, there is further the NAS (Non-Access Stratum) protocol layer.

Each protocol layer provides the protocol layer above it with its services via defined service access points (SAPs). To provide a better understanding of the protocol layer architecture, the SAPs were assigned unambiguous names: The PHY provides its services to the MAC layer via transport channels, the MAC layer provides its services to the RLC layer via logical channels, and the RLC layer provides its services to the PDCP layer as a data transfer function of the RLC mode, i.e. TM (Transparent Mode), UM (Unacknowledged Mode) and AM (Acknowledged Mode). Further, the PDCP layer provides its services to the RRC layer and the U-Plane upper layers via radio bearers, specifically as Signalling Radio Bearers (SRB) to the RRC and as Data Radio Bearers (DRB) to the U-Plane upper layers. According to LTE a maximum of 3 SRBs and 8 DRBs is currently supported.

The radio protocol architecture is not just split horizontally into the above-described protocol layers; it is also split vertically into the "control plane" (C-Plane) and the "user plane" (U-Plane). The entities of the control plane are used to handle the exchange of signalling data between the mobile terminal and the base station, which are required among others for the establishment, reconfiguration and release of physical channels, transport channels, logical channels, signalling radio bearers and data radio bearers, whereas the entities of the user plane are used to handle the exchange of user data between the mobile terminal and the base station.

According to LTE, each protocol layer has particular prescribed functions:
The PHY layer is primarily responsible for i) error detection on the transport channel; ii) channel encoding/decoding of the transport channel; iii) Hybrid ARQ soft combining; iv) mapping of the coded transport channel onto physical channels; v) modulation and demodulation of physical channels.

The MAC layer is primarily responsible for i) mapping between logical channels and transport channels; ii) error correction through HARQ; iii) logical channel prioritization; iv) transport format selection.

The RLC layer is primarily responsible for i) error correction through ARQ, ii) concatenation, segmentation and reassembly of RLC SDUs (Service Data Unit); iii) re-segmentation and reordering of RLC data PDUs (Protocol Data Unit). Further, the RLC layer is modelled such that there is an independent RLC entity for each radio bearer (data or signalling).

The PDCP layer is primarily responsible for header compression and decompression of IP (Internet Protocol) data flows, ciphering and deciphering of user plane data and control plane data, and integrity protection and integrity verification of control plane data. The PDCP layer is modelled such that each RB (i.e. DRB and SRB, except for SRB0) is associated with one PDCP entity. Each PDCP entity is associated with one or two RLC entities depending on the RB characteristic (i.e. uni-directional or bi-directional) and RLC mode.

The RRC layer is primarily responsible for the control plane signalling between the mobile terminal and the base station and performs among other the following functions: i) broadcast of system information, ii) paging, iii) establishment, reconfiguration and release of physical channels, transport channels, logical channels, signalling radio bearers and data radio bearers. Signalling radio bearers are used for the exchange of RRC messages between the mobile terminal and the base station.

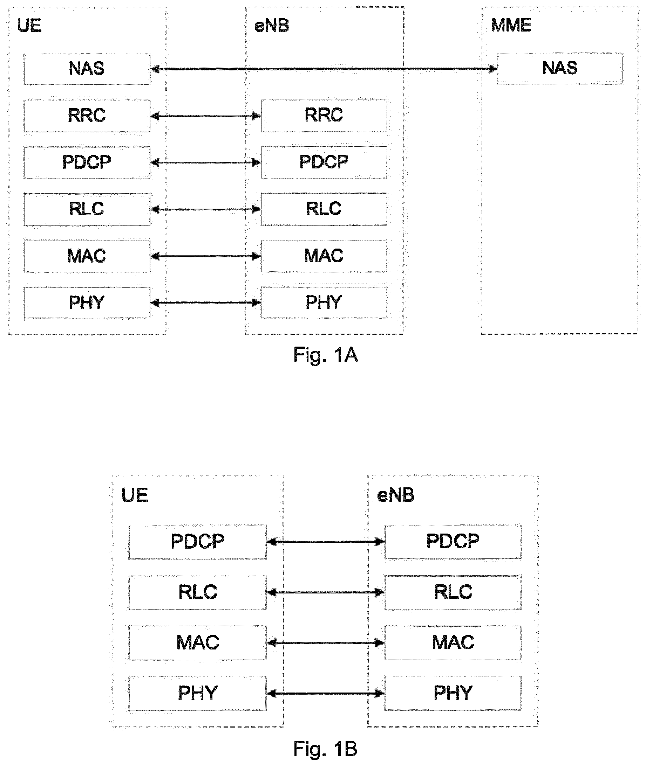

The differences between the C-Plane (control plane) and the U-Plane (user plane) according to E-UTRA (LTE) technology are depicted in Figures 1A and 1B. The RRC protocol and all lower layer protocols (PDCP, RLC, MAC, and PHY) terminate in the eNB, while the NAS protocol layer terminates in the MME residing in the EPC. The interface between the UE and the eNB is the LTE air interface (as known as Uu reference point) and the interface between the eNB and the MME is called S1. Lower layers of the S1 interface are not shown in order to simplify Figure 1A.

Future wearable communication devices may come with or without NAS functionality. If future wearable devices come without NAS functionality and should be controllable by and/or known to the core network (i.e. have a subscription with the MNO) nevertheless, it may be desirable to adapt the NAS entity in a UE in order to serve both, the UE (which is operating in this scenario as a relaying node) and the wearable device, or even implement more than one NAS entity in the UE; one NAS entity for the UE itself and one or more further NAS entities for the various wearable devices as explained in US 2013/0137469 A1.

Current BT technology doesn't offer sufficient means to connect a wearable communication device (with or without NAS functionality, here denoted as "Wearable") to a cellular communication device (with none, one or more NAS entities dedicated to wearables, here denoted as "UE") that may be configured to relay traffic into an MNO's core network in uplink direction, and/or to relay traffic stemming from an MNO's core network in downlink direction.

The NAS layer that controls directly the communication with the cellular mobile core network for a Wearable may reside in the Wearable itself or in the connected UE. If only one of the respective devices, the UE or the Wearable, has a NAS layer implementation, this NAS layer will take control for the Wearable. If both devices have a NAS implementation, the actual control has to be negotiated.

As a result, an exchange of NAS layer capability and a potential negotiation among Wearable and UE regarding control of the Wearable device has to take place before the Wearable device can be registered in the network.

If the UE has multiple NAS layer implementations potentially serving multiple connected Wearables, it will associate the respective NAS layer entity with a specific Wearable device and the respective BT link.

In one aspect, the present invention provides a method for a mobile communication device to communicate with a user device over a short range radio interface connection, the mobile communication device acting as a relaying node for enabling a connection of the user device to a core network, the method comprising transmitting messages over the short range radio interface connection using a message exchange profile, the messages comprising at least one of a mutual non-access stratum capability exchange in which non-access stratum capabilities of the user device and the mobile communication device for connecting the user device to the core network are exchanged; an indication of user preferences and subscriber settings to the user device;; a request for the mobile communication device to maintain the connection to the core network; a message to release the connection to the core network for the user device by the mobile communication device; and a request for the mobile communication device to terminate the core network connection for the user device.

The messages may be transmitted over the short range radio interface connection using a message exchange profile, the message exchange profile defining procedures and a standardized behaviour for information exchange between the two devices.

In a further aspect, the present invention provides a method for a mobile communication device to communicate with a user device over a short range radio interface connection, the mobile communication device acting as a relaying node for enabling a connection of the user device to a core network, the method comprising negotiating NAS capabilities for connecting the user device to the mobile communication device and for operating the user device using the mobile communication device as the relaying node.

The message exchange framework for Wearables, that may be realized for example as a new BT Profile, offers the following benefits. Future wearable devices (with and without NAS functionality) may be registered and de-registered in an MNO's core network via a relaying UE. This makes Wearables controllable by and/or known to the core network (i.e. Wearables may have a subscription with the MNO without the need to have a cellular modem).

The procedures described comprise the exchange of the devices' capabilities as well as configuration of the relaying function over the short range interface based on user preferences, individual subscriber settings, and general network policies.

Preferred embodiments of the invention will now be described, by way of example only, with reference to the accompanying drawings in which:
- Fig. 1A: shows protocol termination points in a control plane;
- Fig. 1B: shows protocol termination points in a user plane;
- Fig. 2: shows a schematic connection of a user device, or Wearable, to a core network via a user equipment device, UE, and a base station with the user device using a NAS entity in the UE;
- Fig. 3: shows a variation on the arrangement of Fig. 2 in which the user device uses its own NAS entity;
- Fig. 4: shows a schematic diagram of inter-core network exchange of NAS specific information;
- Fig. 5A: shows a schematic representation of intra-core network and inter MME exchange of NAS specific information;
- Fig. 5B: shows a schematic representation of intra-core network and inter-functional slice exchange of NAS specific information;
- Fig. 6A: shows a schematic representation of intra-MME exchange of NAS specific information;
- Fig. 6B: shows a schematic representation of intra-functional slice exchange of NAS specific information;
- Fig. 7: is a schematic representation of an interaction between NAS entities in a user device, the core network and a UE.
- Fig. 8: shows a bi-directional capability exchange between a Wearable and a UE initiated by the Wearable;
- Fig. 9: shows a message pair for a negotiation proposal that could be used between a Wearable and a UE to negotiate which NAS entity and/or USIM application to use if there is a more than one option, here: initiated by the Wearable;
- Fig. 10: shows a message pair for a status indication that could be used to indicate communication status changes, here: event triggered;
- Fig. 11: shows a message pair for a registration request that could be used to trigger the UE to set-up a cellular connection to the core network;
- Fig. 12: shows a message pair for a keep-up request that could be used to ask the UE to keep up a cellular connection to the core network;
- Fig. 13: shows a message pair for an early release indication that could be used to indicate an upcoming connection release in advance;
- Fig. 14: shows a message pair for a release indication that could be used to inform the Wearable about a released network connection;
- Fig. 15: shows a message pair for a release request that could be used to request the Wearable to perform a release of a network connection;
- Fig. 16: shows a message pair for a release query that could be used by the Wearable to request the UE to perform a release of a network connection; and
- Fig. 17: shows a message pair for a release indication that could be used to inform the UE about a release of a network connection performed by the Wearable.

The invention is directed to the definition of a message exchange profile for deployment on a short range air interface (such as BT) between a wearable device ("Wearable") (such as a smart watch, fitness tracker, and alike) and a cellular communication device ("UE") (such as a mobile phone) serving as a relaying node.

The profile may consist of procedures and standardized information exchange between the two devices to achieve (at least one of) the following:
Mutual NAS capability exchange;
Indication of User Preferences and Subscriber Settings to the Wearable;
Informing the Wearable about the UE's current communication status;
Requesting the UE to set-up a network connection for the Wearable;
Requesting the UE to keep up the cellular connection;
Releasing the network connection for the Wearable by the UE; and
Requesting the UE to terminate a network connection for the Wearable.

### Mutual capability exchange

Before a Wearable can exchange user data with the MNO's core network via a cellular communication device acting as a relaying UE the two devices need to exchange their NAS capabilities regarding connecting the Wearable to the cellular network. In detail the following information may be relevant:
The Wearable needs to be enabled to indicate to the UE that it is a Wearable, and the UE needs to be enabled to indicate to the Wearable that it has relaying capabilities. For this, two new device categories are proposed to be introduced and used in the novel message exchange profile during the initial phase of signalling:
   The Wearable can signal: "I am a Wearable" and
   The UE can signal "I am a UE with relaying capabilities".
In some scenarios an even finer granularity makes sense. For instance, the category "Wearable" could be sub divided into "glasses", "fitness tracker", "watch", "jewellery", and so on.
Furthermore, in some scenarios it seems beneficial to let the UE announce whether it has a "spare" subscription left, i.e. an unused USIM application dedicated to serving Wearable devices. Said USIM application may for instance
   reside on a removable USIM card plugged into the UE, or
   be inseparably mounted to the circuitry of the UE.
The Wearable may announce its cellular control capabilities, i.e. whether the Wearable has a NAS entity implemented and/or a USIM application included (either embedded or removable, i.e. inserted in a slot).
Additionally, the UE may inform the Wearable as to whether other devices are connected to the UE and whether these may be contacted by the Wearable and how, e.g. to enable building a Personal Area Network (PAN).

In case more than one NAS entity (or USIM application) is available and suited to serve a given Wearable, only one NAS entity (or USIM application) is selected (i.e. according to this invention the actual use/activation of the NAS entity and/or USIM application is negotiated among the Wearable and the UE over the short range air interface).

The "mutual NAS capability exchange" procedure may contain the following steps:

### Option 1

Pre-Condition: The Wearable contacts the UE for the first time.
Either device transmits a message containing its capabilities, probably the Wearable first, then the UE follows (with some parameters proposed for negotiations being based on the Wearable's capabilities received earlier).
In order to finalize the negotiation, the Wearable acknowledges the final parameters.

Post-Condition: Both devices setup the service according to the capabilities and parameters exchanged.

### Option 2

Pre-conditions: Both the UE and the Wearable are already connected.
The set of capabilities changes (e.g., user has disabled mobile roaming).
The device (where the change occurred) sends a capability update; this is then acknowledged by the peer device.
If at the peer device capabilities changed too, the acknowledgement is done in a return capability update.
If a capability update contained parameters to negotiate, the update is acknowledged with the negotiation result.

A detailed example message sequence chart is discussed below.

### Indication of User Preferences and Subscriber Settings to the Wearable

For the initial phase of signalling it may also be relevant whether the user and/or his subscription allows/disallows or prefers/declines certain (types of) Wearables (or services) to connect to the UE. In detail the following information may be relevant.

(Information about) User Preferences (e.g., set on the UE), general network policies, or individual contract settings (e.g., read from a core network data base) could be sent from the UE to the Wearable regarding the type of remote devices that are allowed (or preferred) / disallowed (not preferred) to connect to the given UE. In some scenarios it may even make sense to indicate that a maximum number of Wearables is already met, or to signal the maximum number of additional Wearables that can still connect to the UE in question (*Note:* Regarding the maximum numbers of connected Wearables, this may also be a UE capability rather than a user preference).

### Inform the Wearable about the UE's current communication status

In general, the status of the communication between UE and the corresponding cellular mobile communication network (e.g., a cellular communication network operating according to 3GPP LTE or LTE-Advanced) will influence the (potential) communication of the Wearable. Thus, further pieces of information are proposed to be exchanges between the UE and the Wearable as part of the novel message exchange profile, for example during the initial phase of signalling.

As the UE's communication status may change over time, it is also proposed to enable exchange of such layer 3 information (if needed) during an ongoing short range connection as well. So, in order to keep the connection for the Wearable satisfactory, regular or event based updates (indications of status changes) may be required. In detail the following layer 3 information may be relevant:
Currently registered PLMN. This may be important, since if the UE for any reason is not registered with the right cellular communication network, it will not be able to submit any messages (apart from initial registration of itself).
RRC CONNECTED vs. RRC SUSPENDED vs. RRC IDLE mode of operation.
Data rate that can be offered to
   a single Wearable device; or
   a certain Wearable sub category; or
   a group of Wearables.
Out-of-coverage indicator.
etc.

In addition, it may be beneficial to inform the Wearable over the short range interface about upcoming (i.e. imminent) changes on the cellular link in order to allow the Wearable to perform data transmissions in a more efficient way. For example, a coordinated (i.e. synchronized) transmission of keep-alive message to various application servers on the internet will reduce the need for the UE to continuously (re-) connect to the cellular network (i.e., to continuously perform state transitions) for small data packets. Therefore, means to exchange schedules for data transmissions are proposed to be sent as part of the novel message exchange profile to increase efficiency of connecting a Wearable to a UE. There are different options to achieve this:
The UE indicates to the Wearable when a good opportunity for an exchange of data has come (e.g., upon RRC state transition from IDLE to CONNECTED, or in case of UE entering DRX On-Duration). Likewise, the UE indicates to the Wearable when an opportunity to exchange data has passed (e.g., upon RRC state transition from CONNECTED to IDLE, or in case of UE entering DRX Off-Duration). As any given DRX pattern is usually configured for a certain duration, it may make sense to signal the UE's DRX configuration pattern and validity to the Wearable. ***Note:*** DRX = Discontinuous Reception, a sleep state in LTE introduced for power saving in which the UE is not required to monitor the PDCCH in every sub frame in order to check if there is downlink data available.
Alternatively, the Wearable simply sends data via the short range interface whenever new packets become available. The UE buffers all incoming packets until an opportunity has come to relay the data over the cellular interface. Additionally, the Wearable may tag its data with a "time-critical" flag or a "delay-tolerant" flag. As long as only "delay-tolerant" data is received the UE buffers it for a future uplink transmission. When "time-critical" data is received from the Wearable the UE may choose to deviate from its original pattern and try to relay the data over the cellular interface immediately. This latter behaviour may imply an RRC state transition e.g., from IDLE to CONNECTED.
Alternatively, the UE indicates to the Wearable the time left until an opportunity for exchange of data becomes available (e.g., for Tracking Area Updates).

### Requesting the UE to set-up a network connection for the Wearable

The Wearable may be enabled to send a special request message to the UE using the novel message exchange profile thereby triggering the UE to set-up a cellular connection to the core network. In one embodiment (namely, when it was decided during the mutual capability exchange that a NAS entity in the UE is supposed to be used for the Wearable) this request message may trigger at the same time the registration of the Wearable in the core network by the UE (either by using the same NAS connection into the core network or a separate one, which is dedicated to the Wearable).

### Requesting the UE to keep up the cellular connection

During an ongoing connection over the short range interface, it may be desirable to let the Wearable indicate to the UE
whether more UL data originating from the Wearable can be expected to follow soon; or
whether the Wearable is expecting downlink data (e.g., the contents of a web page, a reply to a keep-alive message, and so on) in response to an uplink message sent previously (e.g., an http get request, a keep-alive message, and so on).

The UE may then choose to keep up the cellular connection for a little while longer (e.g., for a predefined or predicted amount of time), thereby possibly mitigating the need for frequent RRC state transitions from CONNECTED to IDLE and back to CONNECTED again. Said "waiting time" may be calculated by the UE based on previous traffic characteristics (e.g., taking into consideration earlier responses coming in from the same or similar content servers, application peers, and so on).

### Releasing the network connection for the Wearable bv the UE

When an ongoing connection over the cellular air interface (e.g., LTE Uu) is drawing to a close, it is desirable to terminate the two connections (the one over the cellular link and the one over the short range air interface) in a coordinated manner. This may not be possible in all cases (for example, in case the UE experiences an abrupt radio link failure on the cellular air interface), but it is definitively desirable whenever possible. Depending on where the NAS functionality of the Wearable resides, there are two different options for a coordinated approach. In both cases, the UE has to inform the Wearable over the short range interface about the imminent termination of the cellular connection and the Wearable may react as follows:
NAS entity for the Wearable is residing in the UE: An appropriate reaction of the Wearable could be to stop application layer activities and connections to relevant servers. Another appropriate reaction of the Wearable could be to ask the UE to refrain from terminating the cellular connection between the UE and the infrastructure so that the Wearable's NAS connection can be kept alive. Alternatively, the Wearable could ask the UE to postpone the termination process. Such a request may probably include a favoured time span or information about the motivation for said request that may cause the UE to refrain from proceeding. A possible motivation could be for the Wearable to find another suitable UE to connect to during the indicated time span. In some scenarios it is also desirable that the Wearable indicates when it is (presumably or actually) ready for the connection over the cellular air interface to be terminated by the UE.
Wearable has its own NAS entity implemented: In this case, the Wearable itself communicates with the relevant MME in the Mobile Network Operator's core network to de-register at NAS layer. Once this is accomplished the Wearable may indicate a successful release of its registration to the UE, so that the connection over the short range air interface (at lower layers) can be terminated as well as the connection over the cellular air interface (at both NAS layer from UE point of view and lower layers).

### Requesting the UE to terminate a network connection for the Wearable

When the Wearable takes the initiative to terminate an ongoing connection, also two different signalling options exist, depending on where the NAS entity for the Wearable resides:
NAS entity for the Wearable is residing in the UE: The Wearable simply indicates to the UE over the short range interface that it requests the release of its registration at the MME, so that the UE may then generate and transmit a registration release request to the MME on behalf of the Wearable. Theoretically, the UE may use either one of its NAS layers to achieve this, preferably the one that was assigned to and used on behalf of the Wearable. If the UE uses its own NAS connection for this, some inter-core network or intra-core network information exchange would be required (details will be discuss in the following).
Wearable has its own NAS entity implemented: The Wearable directly requests release from the relevant MME over its own NAS connection. Once this procedure has been completed successfully, the Wearable simply informs the UE about the result over the short range air interface.

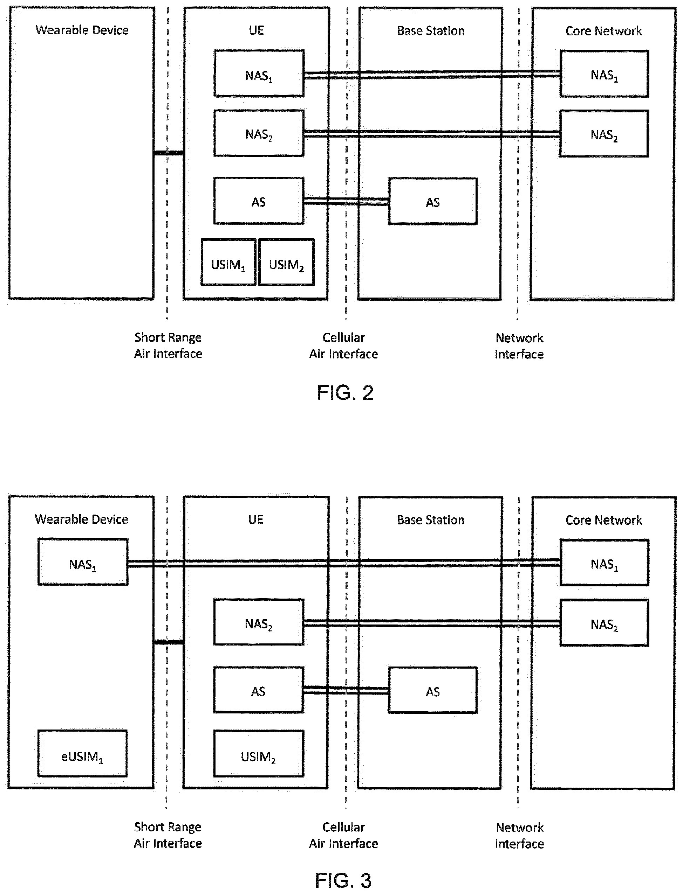

Figs. 2 and 3 show examples for two different implementation options: In Fig. 2 the NAS entity for the Wearable is residing in the UE; in Fig. 3 the Wearable has its own NAS entity implemented.

In the example implementation of Fig. 3 the Wearable has also its own USIM application. In one embodiment, this could be an embedded USIM (eUSIM) that is inseparably mounted to the circuitry of the Wearable.

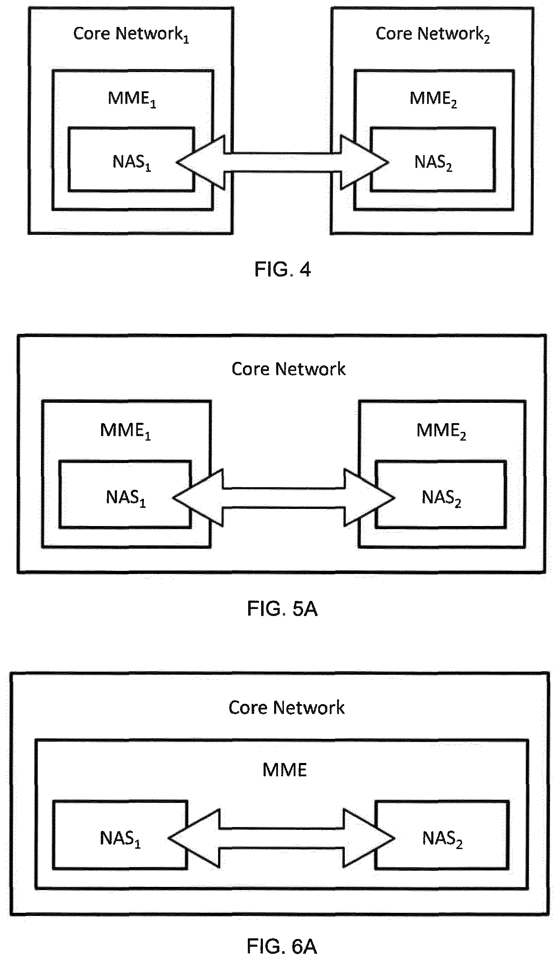

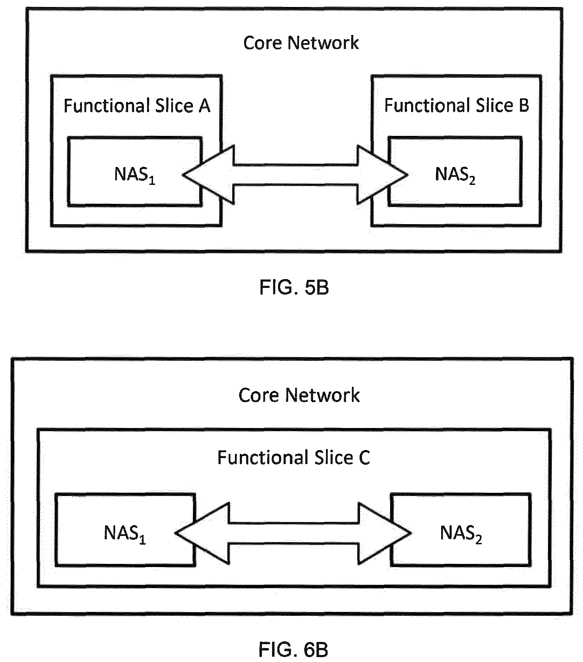

Figs. 2 and 3 show both NAS entities residing in the same core network domain. This doesn't have to be the case in all deployment scenarios: Both NAS entities may be located in different core network domains, in different MMEs, or even in different functional network slices (cf. Figs. 4 to 6).

In some deployment scenarios, it may be sensible to allow for exchange of information between the two NAS entities on the core network side, regardless of whether they are located in the same or different core network domains, MMEs or functional network slices.

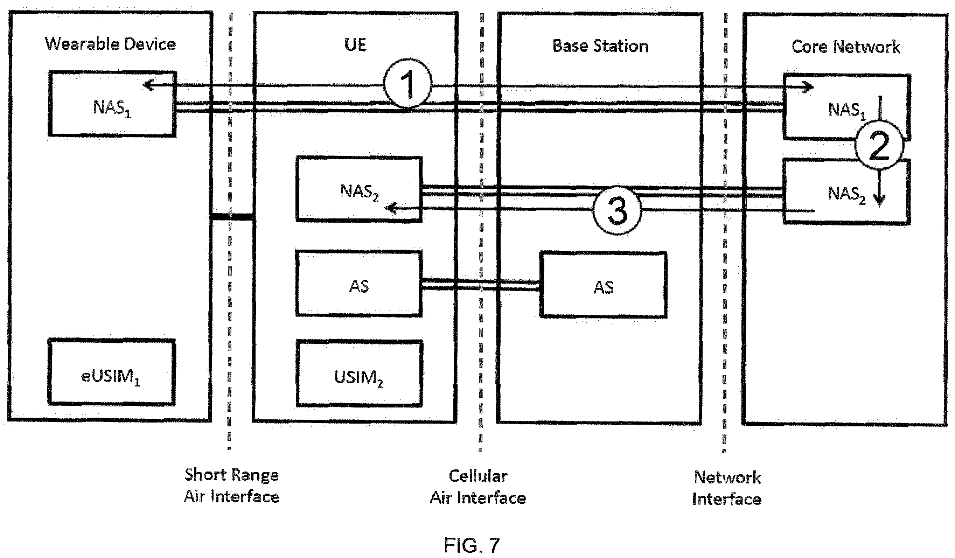

For example, in case the Wearable has its own NAS entity ("NAS₁" as in Fig. 3) and triggers some action at its own NAS layer, the two NAS entities on network side may coordinate themselves in such a way that the NAS₁ informs (or talks to) the NAS entity assigned to the UE ("NAS₂") and vice versa. So, according to this invention data pertinent to (the result of) an action triggered by a first device (e.g., a registration release command sent by the Wearable, step 1) using a first NAS connection can be submitted via the second NAS connection to the second device (e.g., the indication to the UE that the Wearable has successfully terminated its connection at NAS layer, step 3) and vice versa, as shown in Fig. 7. Step 2 depicts the inventive exchange of NAS specific data between the two NAS entities involved on the network side.

### Mutual Capability Exchange & User Preferences & Subscriber Settings

According to one aspect of the present invention a uni-directional or bi-directional capability exchange may take place whenever a Wearable is trying to newly register with a UE. For instance, while requesting information from the UE in order to find out, whether the UE is offering any relaying services, the Wearable may let the UE know that:
It is a Wearable of type "watch".
It has a NAS entity implemented.
It has a USIM inserted that has validated the user's identity.

For instance, as a response to the request received from the Wearable the UE may indicate to the Wearable that:
It is a UE type of device.
It is offering relaying capabilities into a Mobile Network Operator's core network for Wearables.
It has a spare NAS entity implemented for Wearables to use.
It has a spare USIM application for Wearables to use.
Both devices (UE and Wearable) are currently controlled/operated by the same user.
It is capable of supporting building a Personal Area Network (PAN).
It is capable of connecting to up to three different Wearables.

Furthermore, the UE could transmit the following information related to user preferences and/or subscriber settings and/or network policies to the Wearable either in the same response message or in a subsequent (pair of) message(s):
User consent to build a Personal Area Network (PAN) was given.
Network policies grant connection of up to two Wearables.
Subscriber data only allows Wearables of the sub categories "Watch" and "Jewellery" to connect to the UE.

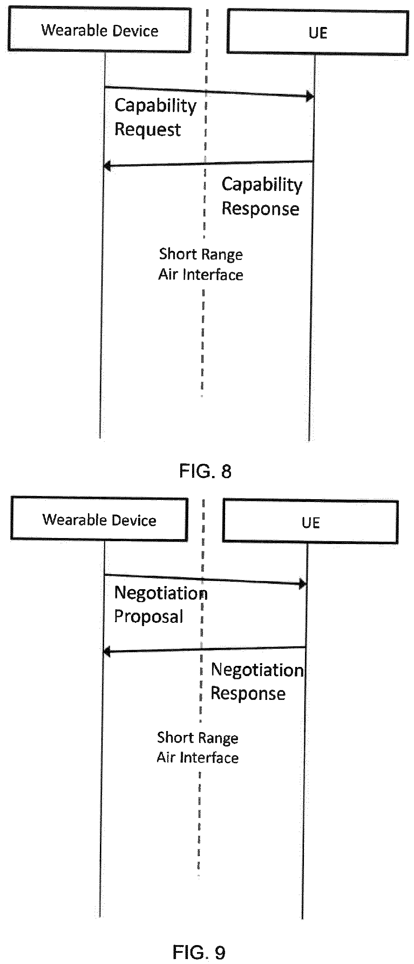

Figure 8 shows an exemplary message sequence chart between a Wearable and a UE for the mutual capability exchange. Possible message structures for the Request/Response pair of Figure 8 are given in the Tables 1 and 2 below. Table 1 shows an example of a Capability Request message while table 2 shows an example of a Capability Response message.

**Table 1**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as a "**Capability Request**" message (in the scope of the novel short range air interface profile). | Mandatory |
| Originator Short Range Address | Identifying the originating device, e.g. the BT Device ID of the Wearable. | Mandatory |
| Recipient Short Range Address | Identifying the intended recipient of this message, e.g. the BT Device ID of the UE. | Mandatory |
| Originator Device Class | Specifying the type of the transmitting device, e.g. "Wearable". | Mandatory |
| Originator Device Class Sub Category | Sub type of the above, e.g. | Optional |
| | • Watch | |
| | • Fitness tracker | |
| | • Glasses | |
| | • Jewellery | |
| | • etc. | |

| Capabilities Container | | |
|---|---|---|
| > NAS Implementation Details | Indicating whether the originating device has implemented a NAS entity of its own, for example: | Mandatory |
| | • true; | |
| | • false. | |
| > Subscriber Identity Details | Indicating whether the originating device has inserted or embedded a Universal Subscriber Identity Module (USIM), for example: | Mandatory |
| | • true; | |
| | • false. | |
| ⋮ | ⋮ | ⋮ |

| Auxiliary Information | | |
|---|---|---|
| > User ID | Information about the user. | Optional |
| ⋮ | ⋮ | ⋮ |

**Table 2**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as a "**Capability Response**" message (in the scope of the novel short range air interface profile). | Mandatory |
| Originator Short Range Address | Identifying the originating device, e.g. the BT Device ID of the UE. | Mandatory |
| Recipient Short Range Address | Identifying the intended recipient of this message, e.g. the BT Device ID of the Wearable. | Mandatory |
| Originator Device Class | Specifying the type of the transmitting device, e.g. "UE". | Mandatory |

| Capabilities Container | | |
|---|---|---|
| > Relaying | Indicating whether the originating device supports relaying functionality for Wearables, for example: | Mandatory |
| | • true; | |
| | • false. | |
| > NAS Implementation Details | Indicating whether the originating device has implemented a spare NAS entity for Wearables, for example: | Mandatory |
| | • true; | |
| | • false. | |
| > Subscriber Identity Details | Indicating whether the originating device has inserted or embedded a spare Universal Subscriber Identity Module (USIM) for Wearables, for example: | Mandatory |
| | • true; | |
| | • false. | |

| Auxiliary Information | | |
|---|---|---|
| > User ID | Indicating whether Wearable and UE are operated by the same user. | Optional |
| ⋮ | ⋮ | ⋮ |

| User Preferences Container | | |
|---|---|---|
| > Building a Personal Area Network (PAN). | For example: | Optional |
| | • granted; | |
| | • not granted. | |
| | | |

| Network Policies Container | | |
|---|---|---|
| > Maximum number of Wearables | For example: | Optional |
| | • at most one; | |
| | • up to two; | |
| | • up to three; | |
| | • etc. | |
| ⋮ | ⋮ | ⋮ |

| Subscriber Settings Container | | |
|---|---|---|
| > Network Policies | For example, maximum data rate that can be assigned for Wearables: | Optional |
| | • at most 500 kbit/s; | |
| | • at most 1 Mbit/s; | |
| | • at most 2 Mbit/s; | |
| | • etc. | |
| ⋮ | ⋮ | ⋮ |

In case more than one NAS entity (or USIM application) is available and suited to serve a given Wearable, only one NAS entity (or USIM application) needs to be selected. For this, the Wearable and the UE would have to negotiate over the short range air interface which of the NAS entities and/or USIM applications is actually to be used. Fig. 9 shows an exemplary message sequence chart between a Wearable and a UE for this negotiation process. More than one iteration may be required. It is also possible that a counter proposal is part of the negotiation response message. Here, the negotiation process is initiated by the Wearable. Alternatively, the process may be initiated by the UE. Possible message structures for the Negotiation Proposal/Response pair of Fig. 9 are skipped for the sake of brevity.

One aspect of the present invention is that a Wearable and a UE that is offering a relaying function into an MNO's core network are first enabled to mutually exchange their capabilities and then to establish, terminate or suspend a (logical) connection for the Wearable into an MNO's core network. User preferences, individual subscriber settings, and general network policies can also be take into account in scope of the message exchange framework disclosed.

### Informing the Wearable about the UE's current communication status

In general, the status of the communication between UE and the corresponding cellular mobile communication network (e.g., a cellular communication network operating according to 3GPP LTE or LTE-Advanced) will influence the (potential) communication of the Wearable.

"Status Indication" messages may be exchanged from the UE to the Wearable as part of the message exchange profile at least during the initial phase of signalling.

As the UE's communication status may change over time, exchange of such information (if needed) may be enabled during an ongoing short range connection as well. So, in order to keep the connection for the Wearable satisfactory, regular or event based updates (status changes) may be required.

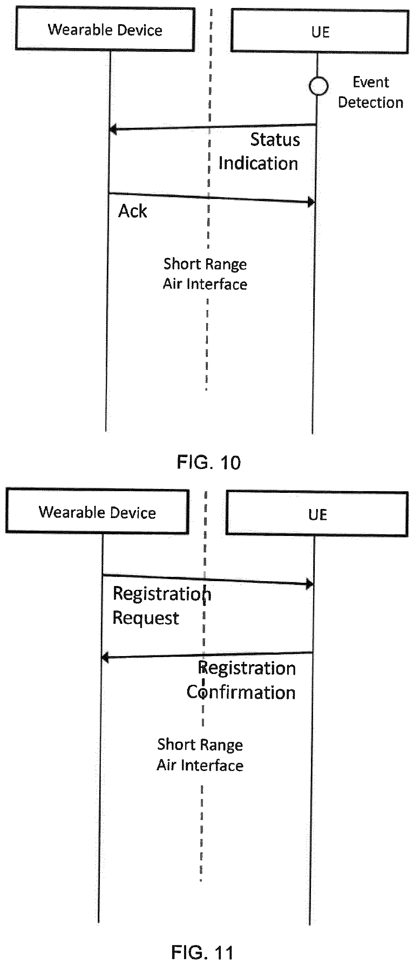

Figure 10 shows an exemplary message sequence chart between a UE and a Wearable initiated by the UE to inform the Wearable about recent changes of the UE's communication status. Here, the transmission of the "Status Indication" message is triggered when an event has been detected. Possible events may comprise a loss of the cellular link (such as "Radio Link Failure" in LTE), a degradation or increase of the data rate over the cellular link, an RRC state transition in the UE, or similar. Alternatively, or additionally, the UE could also be configured to send "Status Indication" messages on a regular basis.

In detail the following information may be relevant:
Currently registered PLMN. This may be important, when the Wearable is bound to a certain subscription, since if the UE for any reason is not registered with the right cellular communication network, it will not be able to submit any messages on behalf of the Wearable.
RRC CONNECTED vs. RRC SUSPENDED vs. RRC IDLE mode of operation.
Data rate that can be offered to
   a single Wearable device; or
   a certain Wearable sub category; or
   a group of Wearables.
Roaming indicator.
Indicator for (de-)activation of the "mobile data" option in the UE.
Out-of-coverage indicator.
etc.

In a further embodiment of this invention, the Wearable may be informed over the short range interface about upcoming (i.e. imminent) changes on the cellular link in order to allow the Wearable to perform data transmissions in a more efficient way. For example, a coordinated (i.e. synchronized) transmission of keep-alive message to various application servers on the internet will reduce the need for the UE to continuously reconnect to the cellular network (i.e., to continuously perform state transitions) for small data packets. Therefore, schedules for data transmissions may be sent as part of the message exchange profile to increase efficiency of connecting a Wearable to a UE. There are different options to achieve this:
The UE indicates to the Wearable when a good opportunity for an exchange of data has come (e.g., upon RRC state transition from IDLE to CONNECTED, or in case of UE entering DRX On-Duration). Likewise, the UE indicates to the Wearable when an opportunity to exchange data has passed (e.g., upon RRC state transition from CONNECTED to IDLE, or in case of UE entering DRX Off-Duration). As any given DRX pattern is usually configured to be valid for a certain duration, it may make sense to signal the UE's DRX configuration pattern and validity to the Wearable. ***Note:*** DRX = Discontinuous Reception, a sleep state in LTE introduced for power saving in which the UE is not required to monitor the PDCCH in every sub frame in order to check if there is downlink data available.
Alternatively, the Wearable simply sends data over the short range interface whenever new packets become available. The UE buffers all incoming packets until an opportunity has come to relay this data over the cellular interface. Additionally, the Wearable may tag its data with a "time-critical" flag or a "delay-tolerant" flag. As long as only "delay-tolerant" data is received the UE buffers it for a future uplink transmission. When "time-critical" data is received from the Wearable the UE may choose to deviate from its original pattern and try to relay the data over the cellular interface immediately. This latter behaviour may imply an RRC state transition e.g., from IDLE to CONNECTED.
Alternatively, the UE indicates to the Wearable the time left until an opportunity for exchange of data becomes available (e.g., for Tracking Area Updates).

Possible message structures for the Status Indication/Acknowledgement pair of messages according to Fig. 10 are given in the Tables 3 and 4 below. Table 3 is an example of a Status Indication message while table 4 is an example of an Acknowledgement message.

**Table 3**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as a "**Status Indication**" message (in the scope of the novel short range air interface profile). | Mandatory |
| Originator Short Range Address | Identifying the originating device, e.g. the BT Device ID of the UE. | Mandatory |
| Recipient Short Range Address | Identifying the intended recipient of this message, e.g. the BT Device ID of the Wearable. | Mandatory |
| Indication Type | Specifying the type of the indication, e.g. | Mandatory |
| | • First Indication; | |
| | • Event based update; | |
| | • Regular update; | |
| | • RRC Schedule; | |
| | • DRX pattern. | |

| Change Container | | |
|---|---|---|
| > RRC State Transition | Indicating the direction of an RRC state transition in the UE, for example: | Optional |
| | • from IDLE to CONNECTED; | |
| | • from SUSPENDED to CONNECTED; | |
| | • from CONNECTED to IDLE | |
| | • from CONNECTED to SUSPENDED; | |
| | • from SUSPENDED to IDLE; | |
| | • from IDLE to SUSPENDED. | |
| > PLMN | Indicating the PLMN the UE is currently registered with, e.g.: | Optional |
| | • MCC + MNC (six digits); | |
| | • None. | |
| > Data Rate (for all Wearables) | For example, the maximum data rate that can be assigned for all Wearables connected to the | Optional |
| | UE: | |
| | • 500 kbit/s; | |
| | • 1 Mbit/s; | |
| | • 2 Mbit/s; | |
| | • etc. | |
| > Roaming | Indicating whether the UE is roaming, for example: | Optional |
| | • true; | |
| | • false. | |
| > Support of Mobile Data | Indicating the current status of the "mobile data" option in the UE, for example: | Optional |
| | • activated; | |
| | • deactivated. | |
| > Out of Coverage | Indicating whether the UE is out-of-coverage, for example: | Optional |
| | • true; | |
| | • false. | |
| > On/Off Schedule | Indicating details of a long-term RRC state transition schedule configured in the UE. | Optional |
| > DRX Pattern | Indicating details of a long-term DRX configuration pattern configured in the UE. | Optional |
| > TAU Opportunity | Indicating TAU opportunities offered by the UE (for Tracking Area Updates that the Wearable may also use). | Optional |
| ⋮ | ⋮ | ⋮ |

**Table 4**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as an "**Acknowledgement**" message (in the scope of | Mandatory |
| | the novel short range air interface profile). | |
| Originator Short Range Address | Identifying the originating device, e.g. the BT Device ID of the Wearable. | Mandatory |
| Recipient Short Range Address | Identifying the intended recipient of this message, e.g. the BT Device ID of the UE. | Mandatory |

| Feedback Container | | |
|---|---|---|
| > Acknowledgement | Indicating whether the corresponding status indication was received successfully by the Wearable, for example: | Mandatory |
| | • true; | |
| | • false. | |
| > In reply to | Echoing back the identifier of the preceding "Status Indication" message. | Mandatory |

A further optional aspect of the present invention is to inform the Wearable about current and future communication state changes of the UE's connection to the network.

Another optional aspect of the present invention is to provide per packet priority and/or delay tolerance from the Wearable to the UE for efficient data transfer to the network.

### Requesting the UE to set-up a network connection for the Wearables (acc. to D)

The Wearable can trigger the UE to perform a registration of the Wearable at the cellular network. The trigger may also be implicit, e.g. the registration of the Wearable at the UE may automatically trigger the UE to register the Wearable at the core network.

A specific registration request message may be provided to the UE containing
The ID of the Wearable to be used in the registration.
In addition, the Wearable may provide alternative IDs, e.g. providing a temporary identity (GUTI) and a unique identity (IMSI) so the UE can register with the temporary ID first and use the IMSI on NW request without requesting the information again.
Information regarding the IP connectivity of the Wearable, e.g. the Packet Data Network (PDN) the Wearable needs to connect to, usually identified by an Access Point Name (APN).
Authentication related information may be exchanged if the UE generates NAS messages on behalf of the Wearable while the Wearable has the SIM or USIM. The easiest (and least disruptive) method is usage of the BT SIM Access Profile (SAP) but an exchange together with the NAS information exchange discussed herein is also possible. The Wearable may also provide information to the UE that is needed at the UE to access the Wearable's SIM or USIM with the BT SIM Access Profile.
UE and Wearable could also negotiate whether UL data transfer from Wearable to UE has to wait for a connection to be established or the Wearable can transmit data right away. The latter would be beneficial to make use of LTE and beyond UL transmission speed from the UE to the NW while the Wearable is limited to BT speeds, on the other hand it requires buffering in the UE for a few seconds and bears the risk of wasting power if the Wearable is rejected by the NW.

If the UE has full control of the NAS entity for the Wearable, it will create and transmit a registration message via the cellular connection to the network it currently uses taking into account the information received from the Wearable and filling-in information related to the UE and its currently established network connection.

Alternatively, the Wearable has a NAS entity implemented on its own and generates the registration message that is then provided to the UE containing above information. The UE may fill-in information missing in the message and transmit the message via the cellular air interface.

In one embodiment of the present invention the Wearable is enabled to send a "Registration Request" message to the UE via the novel message exchange profile thereby triggering the UE to set-up a cellular connection (for instance, a wireless connection according to 3GPP LTE or LTE-Advanced) to the core network. Fig. 11 is showing an example message pair.

In this context, the following details are of relevance:
"Wearable ID" to be used in the Mobile Network Operator's core network.
"PLMN" to register with (to be validated by the UE prior to kicking off the registration process for the Wearable).

Tables 5 and 6 below are giving possible message structures for the Registration Request/Registration Confirmation pair of messages according to Fig. 11. Table 5 is an example of a Registration Request message while table 6 is an example of a Registration Confirmation message.

**Table 5**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as a "**Registration Request**" message (in the scope of the novel short range air interface profile). | Mandatory |
| Originator Short Range Address | Identifying the originating device, e.g. the BT Device ID of the Wearable. | Mandatory |
| Recipient Short Range Address | Identifying the intended recipient of this message, e.g. the BT Device ID of the UE. | Mandatory |
| > Wearable ID | Identifying the Wearable (e.g., in the registration process and during operation) in the core network. | Mandatory |

| Auxiliary Data | | |
|---|---|---|
| > PLMN | Indicating (a list of) PLMNs that the Wearable is allowed to connect to, e.g.: MCC + MNC (six digits) | Optional |
| > Alternative ID | Alternative ID for the Wearable, e.g. a temporary identity (GUTI) and/or a unique identity (IMSI) so that the UE can register with the temporary ID first and use the IMSI on NW request without requesting the information again. | Optional |
| > Connectivity Information | Information regarding the IP connectivity of the Wearable, e.g. the Packet Data Network (PDN) the Wearable needs to connect to. This is usually identified by an Access Point Name (APN). | Optional |
| > Authentication Data | Authentication related information, if the UE generates NAS messages on behalf of the Wearable while the Wearable has the SIM or USIM (as described above). | Optional |

**Table 6**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as an "**Registration Confirmation**" message (in the scope of the novel short range air interface profile). | Mandatory |
| Originator Short Range Address | Identifying the originating device, e.g. the BT Device ID of the UE. | Mandatory |
| Recipient Short Range Address | Identifying the intended recipient of this message, e.g. the BT Device ID of the Wearable. | Mandatory |

| Feedback Container | | |
|---|---|---|
| > Acknowledgement | Indicating whether the corresponding registration request was received successfully by the UE, for example: | Mandatory |
| | • true; | |
| | • false. | |
| > In reply to | Echoing back the identifier of the preceding "Registration Request" message. | Mandatory |

A further optional aspect of this invention is that the Wearable can trigger the UE to set-up the Wearable's (logical) connection to the network.

### Requesting the UE to keep up the cellular connection

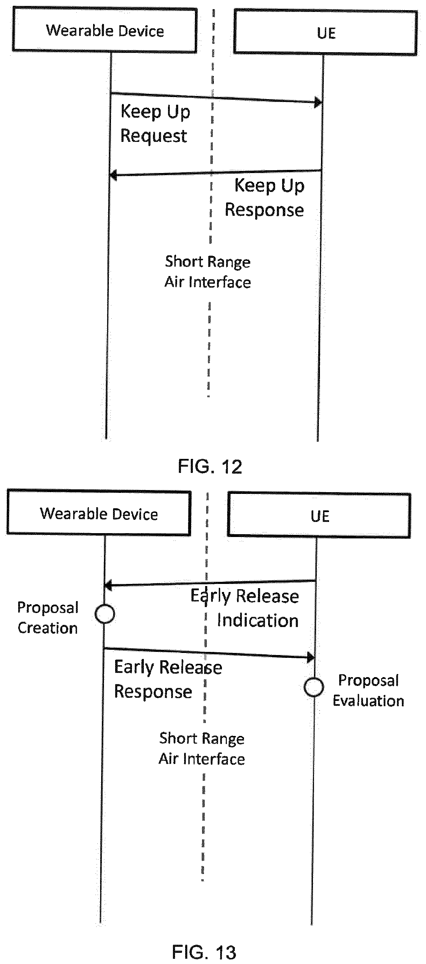

In order to mitigate frequent RRC state transitions from CONNECTED to IDLE and back to CONNECTED again, for example when a Wearable is constantly generating small packets of data, the Wearable may be enabled to send a "Keep Up Request" message to the UE via the novel message exchange profile. Once this message is received by the UE, the UE is expected to keep the current cellular connection into the Mobile Network Operator's core network (for instance, a wireless connection according to 3GPP LTE or LTE-Advanced) alive a little bit longer on behalf of the Wearable. Fig. 12 is showing an example message pair.

During an ongoing connection over the short range interface, it may be desirable to let the Wearable indicate to the UE
whether more UL data originating from the Wearable can be expected to follow soon; or
whether the Wearable is expecting downlink data (e.g., the contents of a web page, a reply to a keep-alive message, and so on) in response to an uplink message sent earlier (e.g., an http get request, a keep-alive message, and so on).

Tables 7 and 8 below give possible message structures for the Keep Up Request/Keep Up Response pair of messages according to Fig. 12. Table 7 is an example of a Keep-Up Request message while table 8 is an example of a Keep-Up Response message.

**Table 7**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as a "**Keep Up Request**" message (in the scope of the novel short range air interface profile). | Mandatory |
| Originator Short Range Address | Identifying the originating device, e.g. the BT Device ID of the Wearable. | Mandatory |
| Recipient Short Range Address | Identifying the intended recipient of this message, e.g. the BT Device ID of the UE. | Mandatory |

| Container | | |
|---|---|---|
| > Projected Time Span | Indicating a time span (calculated or predicted) by the Wearable, e.g.: | Optional |
| | • 500ms, 1s, 2s, etc. | |
| > Traffic Direction | Indicating the direction of the traffic expected to occur by the Wearable, for example: | Optional |
| | • downlink; | |
| | • uplink; | |
| | • both. | |

**Table 8**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as an "**Keep Up Response**" message (in the scope of the novel short range air interface profile). | Mandatory |
| Originator Short Range Address | Identifying the originating device, e.g. the BT Device ID of the UE. | Mandatory |
| Recipient Short Range Address | Identifying the intended recipient of this message, e.g. the BT Device ID of the Wearable. | Mandatory |

| Feedback Container | | |
|---|---|---|
| > Acknowledgement | Indicating whether the corresponding keep up request was received successfully by the UE, for example: | Mandatory |
| | • true; | |
| | • false. | |
| > In reply to | Echoing back the identifier of the preceding "Keep Up Request" message. | Mandatory |
| > Time Span | Indicating a time span determined (or granted) by the UE, e.g.: | Optional |
| | • 500ms, 1s, 2s, etc. | |

A further optional aspect of the present invention is that the Wearable can ask the UE to keep up the Wearable's (logical) connection to the network a little while longer, as there may be more data available in the Wearables uplink buffer to be sent via the relaying UE, or as the Wearable is expecting an answer (in form of downlink data arriving) from a peer entity.

### UE Releasing the network connection for the Wearable

Figs. 13, 14, and 15 show some example message flows between the UE and the Wearable for releasing the network connection for the Wearable.
Fig. 13 shows some optional messages that may be used to realize an early release indication procedure. First, the UE informs the Wearable about a planned (or imminent) release of a connection (message type: "Early Release Indication"). If the Wearable is unhappy with what is proposed by the UE, the Wearable may generate a different release proposal, which is sent back (message type: "Early Release Response") and evaluated by the UE and/or in the core network.

An early indication of a planned release of the network connection (as described above) may be desirable, as it allows the Wearable to look for an alternative relaying device to register with, so that it can easily resume the connection later on. As this is more like a connection suspend rather than a connection release operation (looking at it from the network's point of view), it may be beneficial to hold the Wearable's context in the core network for a quick re-activation of the (logical) connection at a later point in time. For this variant no detailed message structures are shown for the sake of brevity.

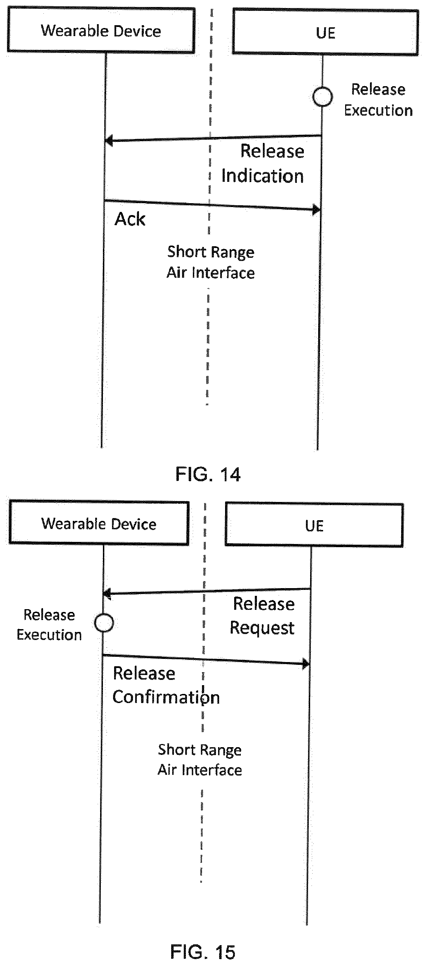

In Fig. 14 the UE, which may (in one embodiment) host the Wearable's NAS entity, informs the Wearable about a successful release of the Wearable's network connection (message type: "Release Indication"). The Wearable simply acknowledges this message (message type: "Ack"). For this variant no detailed message structures are shown either.

The message flow of Fig. 14 may follow right after the message flow of Fig. 13; and the "Proposal Evaluation" of Fig. 13 may result in (or, merge with) the "Release Execution" of Fig. 14.

When a delay has been requested by the Wearable in the "Early Release Response" message of Fig 13 and granted by the UE and/or core network in the subsequent "Proposal Evaluation", the messages shown in Fig. 14 may alternatively be exchanged at a later point in time.

In one embodiment Fig. 15 may serve as an alternative to Fig. 13. In Fig. 15 the Wearable, which may (in another embodiment) host its own NAS entity, is requested by the UE to release its network connection (message type: "Release Request"). The Wearable may then release its network connection and confirm a successful connection release (message type: "Release Confirmation").

In another embodiment Fig. 15 may serve as an alternative to Fig. 14. In this case, the messages shown in Fig. 15 may follow right after the message flow of Fig. 13. As such, the "Release Request" message in Fig. 15 may contain parameters that were calculated or determined during the "Proposal Evaluation" of Fig. 13.

Some exemplary detailed message structures for the example message flow of Fig 15 are given in Tables 9 and 10. Table 9 is an example of a Release Request message while table 10 is an example of a Release Response message.

**Table 9**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as a "**Release Request**" message (in the scope of the novel short range air interface profile). | Mandatory |
| Originator Short Range Address | Identifying the originating device, e.g. the BT Device ID of the UE. | Mandatory |
| Recipient Short Range Address | Identifying the intended recipient of this message, e.g. the BT Device ID of the Wearable. | Mandatory |

| Release Command Container | | |
|---|---|---|
| > Release Instruction | Indicating the type of the connection release command, e.g.: | Optional |
| | • immediate; | |
| | • deferred; | |
| | • cancelled. | |
| > Delay time | Indicating the granted duration for the delay (if | Optional |
| | such a delay has been requested by the Wearable), e.g.: | |
| | • 500ms, 1s, 2s, etc. | |
| > Context held for resumption | Indicating whether the Wearable's context will be held in the core network (if the Wearable is expected to search for another relaying opportunity, e.g.: | Optional |
| | • true; | |
| | • false. | |
| > Context ID | Identifying the Wearable's context in the core network, e.g.: 8 bytes in length. | Optional |
| > Context storage duration | Indicating the duration for the above, e.g.: | Optional |
| | • 500ms, 1s, 2s, etc. | |

**Table 10**

| Information Element | Description | Presence |
|---|---|---|
| Message Header | | |
| Protocol Version | Identifying the protocol version used. | Mandatory |
| Message ID | Unique identifier of this message. | Mandatory |
| Message Type | Identifying this message as an "**Release Confirmation**" message (in the scope of the novel short range air interface profile). | Mandatory |
| Originator Short Range Address | Identifying the originating device, e.g. the BT Device ID of the Wearable. | Mandatory |
| Recipient Short Range Address | Identifying the intended recipient of this message, e.g. the BT Device ID of the UE. | Mandatory |

| Confirmation Container | | |
|---|---|---|
| > Acknowledgement | Indicating whether the corresponding release request was received successfully by the UE, for example: | Mandatory |
| | • true; | |
| | • false. | |
| > Command execution | Indicating whether the release command received was executed, e.g.: | Optional |
| | • true; | |
| | • false. | |
| > In reply to | Echoing back the identifier of the preceding "Release Request" message. | Mandatory |

In a further embodiment of the present invention the early indication can be part of the above-mentioned "communication status indication" and/or "schedule exchange" from the UE to the Wearable.

A further aspect of this invention is that the UE initiates the release process of the Wearable's (logical) connection to the network. The Wearable may be informed in advance about a planned release of the Wearable's (logical) connection to the network and may either execute the release operation itself (e.g., if the relevant NAS entity is residing inside the Wearable), or respond to the UE with a release suspension proposal (e.g., if the relevant NAS entity is residing inside the UE). The UE may inform the Wearable after the UE has successfully terminated the Wearable's (logical) connection to the network. Also, the UE may inform the Wearable about details of a connection suspension time (= context storage time in the core network), if applicable.

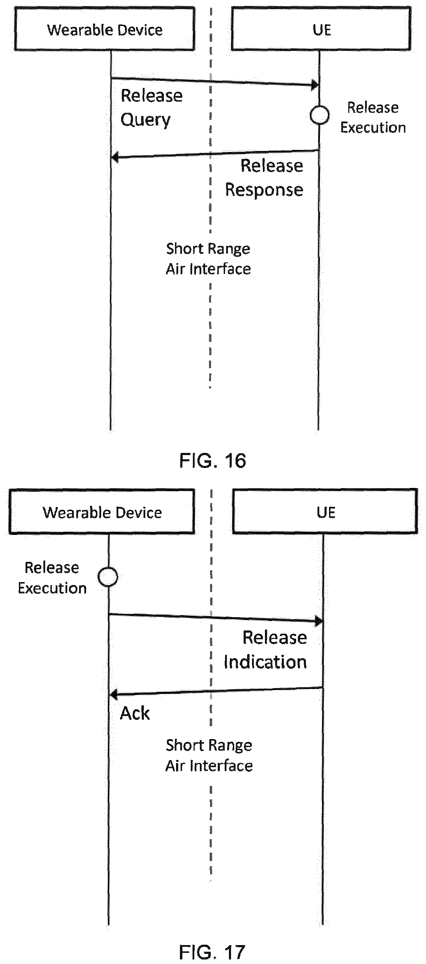

Alternatively, if the release of the Wearable's (logical) network connection is initiated by a NAS entity residing in the Wearable without previous reception of a trigger from the UE, the message flow would look like the one given in Fig. 17. Here, the Wearable is informing the UE about a terminated connection into the MNO's core network (i.e. about an already executed release of a logical connection at NAS layer and the release of its network registration at the MME, respectively). For this variant no detailed message structures are shown for the sake of brevity.

### Requesting the UE to terminate a network connection for the Wearable

As discussed above, the Wearable may also take the initiative to terminate an ongoing connection. Fig. 16 shows an example message flow between the Wearable and the UE with respect to requesting the UE to terminate a network connection for the Wearable.

If the NAS entity for the Wearable resides in the UE, the Wearable simply requests from the UE over the short range interface to release its network registration at the MME (message type "Release Query"), so that the UE may then generate and transmit a registration release request to the MME on behalf of the Wearable ("Release Execution"). The UE may inform the Wearable about the outcome of this effort by means of the "Release Response" message. Some detailed message structures for the example message flow of Figure 16 are given in the Tables 11 and 12. Table 11 is an example of a Release Query message while table 12 is an example of a Release Response message.

**Table 11**

| **Information Element** | **Description** | **Presence** |
|---|---|---|
| Message Header | | |
| Protocol Version | Identifying the protocol version used. | Mandatory |
| Message ID | Unique identifier of this message. | Mandatory |
| Message Type | Identifying this message as a "**Release Query**" message (in the scope of the novel short range air interface profile). | Mandatory |
| Originator Short Range Address | Identifying the originating device, e.g. the BT Device ID of the Wearable. | Mandatory |
| Recipient Short Range Address | Identifying the intended recipient of this message, e.g. the BT Device ID of the UE. | Mandatory |

| Release Command Container | | |
|---|---|---|
| > Release Instruction | Indicating the type of the connection release command, e.g.: | Optional |
| | • immediate; | |
| | • deferred. | |
| > Delay time | Indicating the desired delay time (if such a delay has been requested by the Wearable), e.g.: | Optional |
| | • 500ms, 1s, 2s, etc. | |
| > Context held for resumption | Indicating whether the Wearable would like its context be held in the core network (if the Wearable starts searching for another relaying opportunity), e.g.: | Optional |
| | • true; | |
| | • false. | |
| > Context storage duration | Indicating the desired duration for the above, | Optional |
| | e.g.: | |
| | • 500ms, 1s, 2s, etc. | |

**Table 12**

| **Information Element** | **Description** | **Presence** |
|---|---|---|
| Message Header | | |
| Protocol Version | Identifying the protocol version used. | Mandatory |
| Message ID | Unique identifier of this message. | Mandatory |
| Message Type | Identifying this message as an "**Release Response**" message (in the scope of the novel short range air interface profile). | Mandatory |
| Originator Short Range Address | Identifying the originating device, e.g. the BT Device ID of the UE. | Mandatory |
| Recipient Short Range Address | Identifying the intended recipient of this message, e.g. the BT Device ID of the Wearable. | Mandatory |

| Confirmation Container | | |
|---|---|---|
| > Acknowledgement | Indicating whether the corresponding release query was received successfully by the UE, for example: | Optional |
| | • true; | |
| | • false. | |
| > Command execution | Indicating whether the release command received was executed, e.g.: | Optional |
| | • true; | |
| | • false. | |
| > Context held for resumption | Indicating whether the Wearable's context will be held in the core network, e.g.: | Optional |
| | • true; | |
| | • false. | |
| > Context ID | Identifying the Wearable's context in the core network, e.g.: 8 bytes in length. | Optional |
| > Context storage duration | Indicating the duration for the above, e.g.: 500ms, 1s, 2s, etc. | Optional |
| > In reply to | Echoing back the identifier of the preceding "Release Query" message. | Mandatory |

A further optional aspect of the present invention is that the Wearable asks the UE to release the Wearable's (logical) connection to the network. And the Wearable may be informed about the outcome of the requested release operation (incl. details about the connection suspension time (= context storage time in the core network), if applicable).

In case a Wearable's context is stored on the network side for a future re-activation of a suspended logical connection (e.g., at NAS layer), it is advantageous to provide the Wearable via a first relaying UE with a Context ID (as described for instance within the scope of the "Release Request" message according to Table 9 and the "Release Response" message according to Table 12). This Context ID may be used by the Wearable at a later point in time when it re-activates the suspended connection. Doing so allows faster re-activation of a suspended connection when the Wearable is changing (or substituting) a UE with relaying capabilities.

With regard to the above description of preferred embodiments of the invention, the following is to be noted.

A split of NAS functionality among UE and Wearable is possible. Consequently, a "NAS in the Wearable" setup could mean that the Wearable performs Session Management, Registration, and Security while the UE always performs Mobility (and some other things). Thus, it may make sense to enable a finer granularity for the various NAS functions in course of the present invention, e.g. when it comes to capability exchange ("Where does the NAS reside?" => "Where does what instance of NAS functionality reside?") and capability negotiation ("Which NAS entity is to be used?" => "Which instance of a particular NAS sub function is to be used? - The one in the UE, or the one in the Wearable?").

The names of the messages, events, and information elements shall be understood to merely serve as examples. There are many other options to get the information across the short range air interface. This invention is by no means restricted to the encoding examples and message flows we disclose here.

Furthermore, the various information elements described in connection with the various messages may be grouped in other ways. For example, they may be collated in a new or already existing hierarchical structure, or grouped together with other information elements, for instance in form of a list or a container.

Regarding the possible implementation options according to Figs. 2 and 3, theoretically, there is also a third implementation option, in which the USIM1 (either removable or inseparably mounted) is located in the Wearable, while the NAS1 entity is residing in the UE. This rare set-up was left out intentionally for the sake of brevity. A definition of messages, message flows, events, and information elements to cover this third implementation options can be done in a similar manner to what is disclosed in this invention in detail.

The LTE terminology used here for the different RRC states (CONNECTED vs. SUSPENDED vs. IDLE) shall not be understood as restricting this invention to an LTE environment. For other radio access technologies, other UE states may be defined. For example, for the LTE successor radio access technology defined within the scope of 5G, the same, similar, or other RRC states may be defined and supported by UE implementations.

While BT may represent a preferred embodiment of the present invention, the wireless short range technology supported by the wearable device and the cellular communication device for the exchange of messages as described herein (cf. short range air interface according to Figures 2 and 3) doesn't have to be (based on) BT in all cases. Other wireless short range technologies, such as WiFi, may also be suited to support the spirit of the methods described in this document and are as such explicitly included within the scope of the present invention.

In one embodiment, the wearable device itself may have implemented a(t least one) cellular modem, so it may take on the form of a cellular communication device. The radio access technologies supported by the cellular modem(s) of the wearable device and the cellular modem(s) of the cellular communication device may be the same or different. Consequently, the term "Wearable" shall not be understood as a general restriction. In some embodiments a wearable device as defined within the scope of this invention may also be a (form of) cellular communication terminal, generally referred to as a mobile communication device, such as a mobile phone.

Preferred aspects of the invention include:
1. A method for a mobile communication device to communicate with a user device over a short range radio interface connection, the mobile communication device acting as a relaying node for enabling a connection of the user device to a core network, the method comprising transmitting messages over the short range radio interface connection using a message exchange profile, the messages comprising at least one of:
   a mutual non-access stratum, NAS, capability exchange in which NAS capabilities of the user device and the mobile communication device for connecting the user device to the core network are exchanged;
   an indication whether consent to build a personal area network has been given;
   an indication as to a maximum number of user devices which the mobile communication device may make a connection to;
   an indication as to what type of user device the mobile communication device may make a connection to;
   a request for the mobile communication device to maintain the connection to the core network;
   a message to release the connection to the core network for the user device by the mobile communication device; and
   a request for the mobile communication device to terminate the core network connection for the user device.
2. The method according to aspect 1, wherein the messages comprise more than one of:
   a mutual NAS capability exchange in which NAS capabilities of the user device and the mobile communication device for connecting the user device to the core network are exchanged;
   an indication whether consent to build a personal area network has been given;
   an indication as to a maximum number of user devices which the mobile communication device may make a connection to;
   an indication as to what type of user device the mobile communication device may make a connection to;
   a request for the mobile communication device to maintain the connection to the core network;
   a message to release the connection to the core network for the user device by the mobile communication device; and
   a request for the mobile communication device to terminate the core network connection for the user device,
   in any combination.
3. A method for a mobile communication device to communicate with a user device over a short range radio interface connection, the mobile communication device acting as a relaying node for enabling a connection of the user device to a core network, the method comprising negotiating non-access stratum, NAS, capabilities for connecting the user device to the mobile communication device and for operating the user device using the mobile communication device as the relaying node.
4. The method according to any above aspect, wherein the user device and the mobile communication device mutually exchange their NAS capabilities and then establish the connection of the user device to the core network.
5. The method according to aspect 4, wherein at least one of user preferences, individual subscriber settings and general network policies are transmitted in the mutual exchange of NAS capabilities.
6. The method according to any above aspect, wherein the mobile communication device informs the user device about current and future communication state changes of a connection of the mobile communication device to the core network.
7. The method according to any above aspect, wherein the user device provides at least one of packet priority information and delay tolerance information to the mobile communication device.
8. The method according to any above aspect, wherein the user device triggers the mobile communication device to set up the connection of the user device to the core network.
9. The method according to any above aspect, wherein user device transmits a message to the mobile communication device requesting the mobile communication device to maintain the connection of the user device to the core network.
10. The method according to aspect 9, wherein the message requesting the mobile communication device to maintain the connection of the user device to the core network is transmitted when the user device has data stored in a buffer waiting to be sent or downlink data is awaited.
11. The method according to any above aspect, wherein the mobile communication device initiates a release of the connection of the user device to the core network.
12. The method according to aspect 11, wherein the user device is informed in advance of a planned release of the connection of the user device to the core network.
13. The method according to any above aspect, wherein the user device transmits a request to the mobile communication device to release the connection to the core network.
14. The method according to any above aspect, wherein the mobile communication device triggers the core network to keep alive at least one user device context during the process of releasing a connection between the user device and the core network.
15. The method according to aspect 14, wherein the mobile communication device provides the user device with a context identifier that may be stored in the user device for use at a later point in time.
16. The method according to aspect 14 or aspect 15, wherein the user device uses the stored context identifier when it tries to re-activate a connection to a core network via another mobile communication device.

## Claims

1. A method for a mobile communication device to communicate with a user device over a short range radio interface connection, the mobile communication device acting as a relaying node for enabling a connection of the user device to a core network, the method comprising exchanging communication status messages for connecting the user device to the mobile communication device and for operating the user device using the mobile communication device as the relaying node,
the method comprising:
the mobile communication device informing the user device about a current communication status of the mobile communication device with the core network by exchanging status indication messages between the mobile communication device and the user device, wherein the status indication messages provide a currently registered public land mobile network of the mobile communication device,
wherein the user device sends a registration request to the mobile communication device to set up a connection of the user device to the core network via the mobile communication device, the registration request comprising information identifying the user device in the core network and indicating one or more public land mobile networks which the user device may connect to, the registration request triggering the mobile communication device to set up a connection to the core network if the currently registered public land mobile network of the mobile communication device corresponds to a public land mobile network which the user device may connect to.

2. The method according to claim 1, wherein the user device and the mobile communication device mutually exchange their NAS capabilities and then establish the connection of the user device to the core network.

3. The method according to claim 1 or claim 2, wherein the short range radio connection is a sidelink connection, preferably one of a PC5, bluetooth and a wireless local area network connection.

4. The method according to any preceeding claim, wherein the user device provides delay tolerance information to the mobile communication device.

5. The method according to any preceding claim, wherein user device transmits a message to the mobile communication device requesting the mobile communication device to maintain the connection of the user device to the core network.

6. The method according to claim 5, wherein the message requesting the mobile communication device to maintain the connection of the user device to the core network is transmitted when the user device has data stored in a buffer waiting to be sent or downlink data is awaited.

7. The method according to any preceding claim, wherein the mobile communication device triggers the core network to keep alive at least one user device context during the process of releasing a connection between the user device and the core network.

8. The method according to claim 7, wherein the mobile communication device provides the user device with a context identifier that may be stored in the user device for use at a later point in time.

9. The method according to claim 7 or claim 8, wherein the user device uses the stored context identifier when it tries to re-activate a connection to a core network via another mobile communication device.
